# EUROPÄISCHE PATENTANMELDUNG

(11) **EP 1 906 709 A1**
(43) Veröffentlichungstag der Anmeldung: **02.04.2008**
(21) Anmeldenummer: 07017828.0
(22) Anmeldetag: 12.09.2007
(51) Int. Cl.: H05B 6/12

(54) **Induktionsheizeinrichtung für ein Induktionskochfeld und Induktionskochfeld**

(30) Priorität: 26.09.2006 DE 102006047121
(71) Anmelder: E.G.O. ELEKTRO-GERÄTEBAU GmbH, 75038 Oberderdingen (DE)
(72) Erfinder: Haag, Thomas, 68794 Oberhausen-Rheinhausen (DE)
(74) Vertreter: Patentanwälte Ruff, Wilhelm, Beier, Dauster & Partner

(57) **Zusammenfassung**

Bei einer Induktionsheizeinrichtung (15) für ein Induktionskochfeld (11) sind auf einer Induktionsspule (17) zwei Schichten von Isolationsfolien (20a, 20b) angebracht sowie darüber eine flache Wärmedämmung (22). Die beiden Isolationsfolien (20a, 20b) tragen an ihrer jeweiligen Oberseite eine elektrisch leitfähige Beschichtung (24, 25), die mit einem Erdungsanschluss (28) verbunden ist so werden Ableitströme abgeleitet, damit ein Benutzer bei Berührung eines Kochgeschirrs (12) auf dem Induktionskochfeld (11) keinen elektrischen Schlag bekommt.

## Beschreibung

### Anwendungsgebiet und Stand der Technik

Die Erfindung betrifft eine Induktionsheizeinrichtung für ein Induktionskochfeld sowie ein derartiges Induktionskochfeld.

Es ist aus der DE 10 2004 053 963 A1 bekannt, bei einem Induktionskochfeld mindestens eine der Seiten einer Glaskeramikplatte mit einer leitfähigen Schicht zu versehen, die geerdet ist. Dies soll als elektrischer Schutz dienen, um zu verhindern, dass beispielsweise bei einem Bruch der Kochfeldplatte Flüssigkeit, die bei einem Kochvorgang übergelaufen ist, hindurchtritt und in der darunter angeordneten Induktionsheizeinrichtung einen Kurzschluss verursachen kann. Des weiteren kann durch eine solche zwischen Induktionsheizeinrichtung und Kochgefäß angeordnete Fläche eine aufgrund immer höher werdender Induktionsspannungen und -frequenzen mögliche Spannung an dem metallischen Kochgefäß abgebaut bzw. als Ableitstrom abgeleitet werden, sodass ein Benutzer keinen elektrischen Schlag erhält beim Berühren des Kochgefäßes.

### Aufgabe und Lösung

Der Erfindung liegt die Aufgabe zugrunde, eine eingangs genannte Induktionsheizeinrichtung sowie ein eingangs genanntes Induktionskochfeld zu schaffen, mit denen Probleme des Standes der Technik beseitigt werden können und insbesondere das Entstehen einer vorgenannten Spannung am Kochgefäß samt Gefahr eines elektrischen Schlags vermieden werden kann.

Gelöst wird diese Aufgabe durch eine Induktionsheizeinrichtung mit den Merkmalen des Anspruchs 1 sowie ein Induktionskochfeld mit den Merkmalen des Anspruchs 11. Vorteilhafte sowie bevorzugte Ausgestaltungen der Erfindung sind in den weiteren Ansprüchen angegeben und werden im Folgenden näher erläutert. Im Rahmen der Erfindung sind die Begriffe Schicht und Beschichtung gleichbedeutend. Ein Unterschied besteht nur in der Herstellung, nicht jedoch in der Funktion für die Ableitströme. Der Wortlaut der Ansprüche wird durch ausdrückliche Bezugnahme zum Inhalt der Beschreibung gemacht.

Die Induktionsheizeinrichtung ist für ein Induktionskochfeld vorgesehen bzw. daran befestigt, und zwar unter einer Tragplatte oder Abdeckung des Induktionskochfeldes, welche in der Praxis vielfach aus Glaskeramik besteht. Darunter wird eine Induktionsspule der Induktionsheizeinrichtung angeordnet. Oberhalb der Induktionsspule ist mindestens eine elektrisch leitfähige und dünne Schicht vorgesehen, und zwar an der Induktionsheizeinrichtung angeordnet bzw. befestigt. Diese elektrisch leitfähige Schicht ist geerdet. Diese Erdung kann entweder sozusagen direkt sein oder aber hochohmig ausgeführt werden, beispielweise mit einem Widerstand von 1 kOhm bis 10 kOhm, unter Umständen sogar noch höher. Die Anordnung bzw. Befestigung der elektrisch leitfähigen Schicht an der Induktionsheizeinrichtung sollte so sein, dass es eine fertige Baueinheit gibt, die die Induktionsheizeinrichtung und die elektrisch leitfähige Schicht aufweist. Diese Baueinheit wird dann bei Montage des Induktionskochfeldes unter dessen Tragplatte bzw. Abdeckung montiert. Ein großer Vorteil hierbei gegenüber einer Schicht direkt an der Tragplatte oder Abdeckung liegt darin, dass kein elektrischer Anschluss von der Tragplatte weggeführt werden muss. Die Induktionsheizeinrichtung weist ohnehin elektrische Anschlüsse sowie üblicherweise auch einen Masse- bzw. Erdungsanschluss auf. Die elektrische Verbindung zwischen der leitfähigen Schicht und beispielsweise diesem Erdungsanschluss stellt also kein Problem dar und kann innerhalb der genannten Baueinheit vorgesehen werden. Bei der eingangs genannten DE 10 2004 053 963 A1 dagegen ist nicht nur mit viel Aufwand die Tragplatte oder Abdeckung des Induktionskochfeldes zu beschichten, was beispielsweise bei einer an der Unterseite üblicherweise genoppten Glaskeramik noch besonderen Aufwand darstellt. Es muss auch noch auf aufwendige Art und Weise eine elektrische Kontaktierung wie beispielsweise ein Kabel odgl. von dieser Beschichtung an einen Erdungsanschluss geführt werden, der beispielsweise an der darunter anzuordnenden Induktionsheizeinrichtung ist. Dies stellt in der Praxis sowohl bei der Herstellung der Tragplatte als auch vor allem bei der Montage ein großes Problem dar.

In Ausgestaltung der Erfindung ist es möglich, dass ein oberhalb der Induktionsspule angeordnetes bzw. befestigtes Flachmaterial elektrisch leitfähig beschichtet wird. Dieses Flachmaterial kann als einzelne Lage vorliegen und beispielsweise eine Isolation sein. Bevorzugt ist es eine elektrische Isolation wie beispielsweise eine Isolationsfolie in Form von Kapton odgl.. Vielfach werden bei derartigen Induktionsheizeinrichtungen oberhalb der Induktionsspule eine oder zwei Lagen einer derartigen Isolationsfolie eingesetzt. Somit kann in vorteilhafter Ausgestaltung der Erfindung eine dieser unter Umständen ohnehin vorgesehenen Isolationsfolien oder Isolationen mit der genannten Schicht beschichtet werden. Diese Isolationsfolien werden vorteilhaft an der Induktionsspule festgeklebt bzw. auf diese aufgeklebt. Dieses Kleben ist selbstverständlich auch mit einer beschichteten Isolationsfolie auf gleiche Art und Weise möglich für einen leichten Zusammenbau. Nach dem Kleben wird dann vorzugsweise die elektrische Verbindung zwischen einem Erdungsanschluss der Induktionsheizeinrichtung und der Beschichtung bzw. der Schicht an der Isolationsfolie hergestellt. Da jedoch die Schicht in diesem Zustand gut zugänglich ist und vor allem keine große und sperrige Tragplatte involviert ist, kann dies relativ einfach erfolgen.

Eine andere Möglichkeit ist es, die elektrisch leitfähige Schicht an einer thermischen Isolation vorzusehen, wobei vorteilhaft diese thermische Isolation eine dünne Lage von Isolationsmaterial ist, beispielsweise Melange bzw. Fasermaterial. Auch hier ist es in vielen Fällen möglich, derartiges Isolationsmaterial mit einer Metallbeschichtung zu versehen, beispielsweise durch Aufdampfen, und anschließend elektrische Anschlussmöglichkeiten anzubringen.

Vorteilhaft ist die Schicht bzw. Beschichtung relativ dünn. Sie sollte zwar mit dem Kochgefäß einen kapazitiven Spannungsteiler bilden. Sie braucht dazu jedoch nicht sehr voluminös bzw. dick sein, auch damit dort keine Wirbelströme induziert werden, die ja im Kochgefäßboden induziert werden sollen für dessen Erwärmung. Eine Schichtdicke liegt vorteilhaft unter 100 µm. Besonders vorteilhaft beträgt sie sogar maximal 80 µm oder sogar weniger als 50 µm, beispielsweise 10 µm. Eine derart dünne Schicht ist immer noch ausreichend für die vorgenannten Ableitströme, entzieht dem Magnetfeld jedoch kaum Energie.

Auch für den vorgenannten kritischen Punkt, nämlich dass in der Schicht bzw. Beschichtung möglichst keine Wirbelströme induziert werden sollen, ist es von Vorteil, wenn der elektrische Widerstand der Schicht eher relativ groß ist bzw. ein Stück oder sogar deutlich über demjenigen von Kupfer liegt. Als Materialien eignen sich hier vor allem Graphit oder Metalle wie Aluminium. Insbesondere Aluminium weist den großen Vorteil auf, dass es gut mit beherrschbaren Beschichtungsverfahren auch auf nichtmetallische Oberflächen sowie auch beispielsweise auf die vorgenannten Isolationsfolien aufgebracht werden kann.

Um die vorgenannte Funktion eines kapazitiven Spannungsteilers zu erfüllen, ist es von Vorteil, wenn die Schicht oder Beschichtung mindestens die gleiche Ausdehnung hat bzw. Fläche einnimmt wie die Induktionsspule. Besonders bevorzugt überragt sie die Induktionsspule seitlich ein Stück, beispielsweise um 5% oder 10% des Durchmessers.

Die Fläche der Schicht oder Beschichtung muss nicht zwingend geschlossen bzw. vollflächig sein. Sie kann vorteilhaft die Form einer Gabel, eines Sterns odgl. haben und an einem Punkt mit dem Erdpotential verbunden sein. Besonders vorteilhaft kann die Beschichtung die Form einer Spirale aufweisen, beispielsweise einer archimedischen Spirale, bei der die Verbindung mit dem Erdpotential an einer beliebigen Stelle der Spirale erfolgt.

Für die genannte Funktion als Ableiter kann es von Vorteil sein, dass sogar zwei oder eventuell noch mehr der genannten elektrisch leitfähigen Schichten vorgesehen sind. Dazu sollten sie natürlich einen zumindest geringen Abstand zueinander aufweisen. Dies kann beispielsweise dadurch erreicht werden, dass eine Schicht an einer vorgenannten Isolationsfolie und eine andere Schicht an einer vorgenannten Wärmedämmung vorgesehen ist. Alternativ können zwei derartige beschichtete Isolationsfolien vorgesehen sein. Im Rahmen der Erfindung ist es vor allem wichtig, dass die Schicht bzw. Beschichtung getrennt ist von der Abdeckung oder Tragplatte. Es ist auch von Vorteil, wenn sie zusätzlich einen gewissen Abstand dazu aufweist, also auch nicht an die Unterseite der Abdeckung angelegt ist bzw. diese berührt.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Seitendarstellung eines erfindungsgemäßen Induktionskochfeldes mit einer Induktionsheizeinrichtung mit zwei elektrisch leitfähigen und geerdete Schichten und
- Fig. 2: eine Abwandlung einer Induktionsheizeinrichtung ähnlich Fig. 1.

### Detaillierte Beschreibung der Ausführungsbeispiele

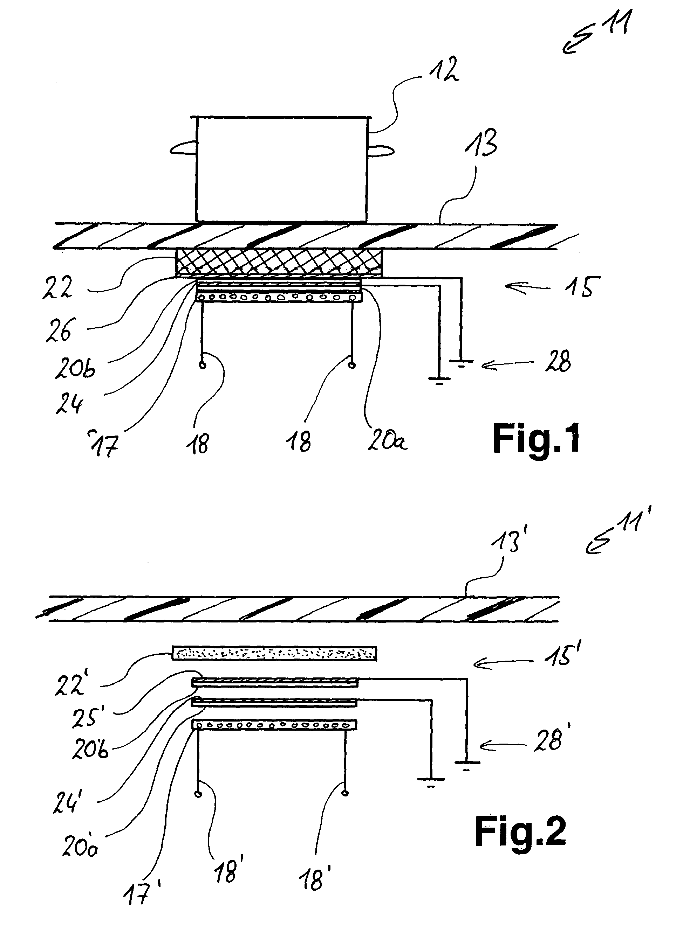

In Fig. 1 ist ein Induktionskochfeld 11 mit einer Kochfeldplatte 13 gemäß der Erfindung dargestellt in einem stark schematisierten seitlichen Schnitt. Das Induktionskochfeld 11 mit dem Kochgeschirr 12 darauf weist unter der Kochfeldplatte 13 eine Induktionsheizeinrichtung 15 auf. Die Induktionsheizeinrichtung 15 weist eine Induktionsspule 17 auf, die an sich üblich aufgebaut sein kann. Oberhalb der Induktionsspule 17 befindet sich eine Isolationsfolie 20a und darüber noch eine Isolationsfolie 20b. Derartige Isolationsfolien werden auch im Stand der Technik bei Induktionsspulen verwendet und können beispielsweise aus Kapton bestehen. Es kann auch eine sogenannte Glimmerfolie sein. Oberhalb der Isolationsfolien 20a und 20b ist eine Wärmedämmung 22 angeordnet. Diese kann vor allem dazu dienen, bei einer zu hohen Erwärmung des Bodens des Kochgeschirrs 12 und Übertragung dieser Wärme durch die Kochfeldplatte 13 hindurch eine Überhitzung der Induktionsheizeinrichtung 15 samt Beschädigung zu vermeiden. Die Wärmedämmung 22 kann aus sogenannter Melange bestehen, welches eine Mischung aus wärmedämmenden Fasern ist. Die Schicht kann entweder relativ eigenstabil sein oder aber sehr weich sein nach Art eines Stoffs. Ebenso kann die Wärmedämmung 22 auch eine dicke Glimmerschicht sein und stabile mechanische Eigenschaften aufweisen.

Die Wärmedämmung 22 bildet also eine thermische Trennung bzw. einen thermischen Schutz für die Induktionsheizeinrichtung 15. Die Isolationsfolien 20a und 20b bilden eine elektrische Isolierung bzw. einen Schutz des Benutzers oberhalb der Kochfeldplatte 13, insbesondere mit dem Ziel, die Induktionsheizeinrichtung in eine andere Schutzklasse zu bringen. Dazu sind noch die elektrisch leitfähigen Beschichtungen 24 und 26 vorgesehen. Die erste elektrisch leitfähige Beschichtung 24 ist auf die obere Seite der unteren Isolationsfolie 20a aufgebracht. Die zweite elektrisch leitfähige Beschichtung 26 ist auf die Unterseite der Wärmedämmung 22 aufgebracht. Die beiden Beschichtungen 24 und 26 sind mit Erdungsanschlüssen 28 geerdet bzw. an Masse gelegt. Die Beschichtungen 24 und 26 können unterschiedlich ausgebildet sein bzw. hergestellt werden, je nachdem, auf was für eine Unterlage sie aufgebracht werden. Dies wird nachfolgend noch genauer erläutert.

In dieser Darstellung liegen sämtliche Schichten wie im Einbauzustand auch aufeinander und die gesamte Baueinheit der Induktionsheizeinrichtung 15 ist an die Unterseite der Kochfeldplatte 13 angedrückt. Allerdings ist die Darstellung nicht maßstäblich, sondern eben schematisch. Deswegen sind vor allem die Beschichtungen 24 und 26 viel dicker dargestellt als in der Praxis. Wie zuvor beschrieben worden ist, kann die Beschichtung beispielsweise aus Aluminium bestehen, da derartige Beschichtungen gut auch auf die genannten Isolationsfolien aufgebracht werden können.

In Fig. 2 ist eine Abwandlung einer Induktionsheizeinrichtung 15' dargestellt, wobei hier der Aufbau der Induktionsheizeinrichtung auseinandergezogen ist bzw. die einzelnen Teile getrennt dargestellt sind für eine bessere Übersichtlichkeit. Hier sind oberhalb der Induktionsspule 17' wiederum zwei Isolationsfolien 20'a und 20'b vorgesehen, über denen wiederum eine Wärmedämmung 22' verläuft, die hier aus Glimmer besteht. Diese Teile entsprechen an sich denjenigen aus Fig. 1. Der Unterschied liegt hierbei darin, dass die Wärmedämmung 22' keine elektrisch leitfähige Beschichtung trägt, sondern jeweils nur die Isolationsfolien 20a' und 20b'. Dabei trägt die Isolationsfolie 20a' eine erste Beschichtung 24' und die Isolationsfolie 20b' eine zweite Beschichtung 25'. Die Wärmedämmung 22' weist keine elektrisch leitfähige Beschichtung auf. Dies hat den Vorteil, dass eine Beschichtung des Materials der Wärmedämmung 22' mit leitfähigem Material unter Umständen schwierig sein kann. Des weiteren kann dann die Isolationsfolie großserientechnisch mit einer entsprechenden elektrisch leitfähigen Beschichtung versehen werden und dann muss jeweils nur ein einziger Typ von Isolationsfolien verarbeitet werden.

Grundsätzlich ist zu den Ausführungen gemäß Fig. 1 und Fig. 2 zu sagen, dass eine elektrische Kontaktierung an die jeweils vorhandene elektrisch leitfähig Beschichtung und zu den Erdungsanschlüssen 28 durchgeführt werden muss. Diese ist hier im Detail nicht näher dargestellt, ist für den Fachmann jedoch problemlos durchzuführen. Beispielsweise kann hier ein Anschluss durch flächiges Verkleben eines leitfähigen Pads odgl. an einem Kabel erfolgen.

Zu den Zeichnungen ist noch zu bemerken, dass hier die Induktionsheizeinrichtung eine Baueinheit ist, die als ein einziges Teil in der Montage an dem Induktionskochfeld 11 bzw. unter der Kochfeldplatte 13 befestigt wird. Dies wird in der Praxis meistens so realisiert, dass die Isolationsfolie auf einer Seite selbstklebend ist und so auf die Oberseite der Induktionsspule 17 aufgeklebt werden kann. Darauf wird dann die Wärmedämmung 22 befestigt. Beispielsweise kann sie ebenfalls aufgeklebt werden. Alternativ ist die Verwendung von doppelseitigem Klebeband odgl. möglich. Eine wiederum weitere Alternative besteht darin, bei der oberen Isolationsfolie 20 auf beiden Seiten eine Klebeschicht vorzusehen. Somit bilden in der Praxis die Schichten auf der Induktionsspule 17 einen flachen Verbund, der fest mit der Induktionsspule zusammenhängt.

In der Praxis liegt die Wärmedämmung 22 vorteilhaft an der Unterseite der Kochfeldplatte 13 an. Da in vorteilhafter Ausgestaltung der Erfindung keine elektrisch leitfähige Beschichtung an der Kochfeldplatte 13 anliegt, ist, im Falle einer Beschichtung an der Wärmedämmung 22, diese wie in Fig. 1 dargestellt an der Unterseite vorgesehen. Selbstverständlich ist es im Rahmen der Erfindung auch möglich, nur eine einzige Isolationsfolie 20 vorzusehen. Aus Vereinfachungsgründen bei der Produktion kann dann ebenfalls vorgesehen sein, dass nur diese Isolationsfolie an ihrer Oberseite eine elektrisch leitfähige Beschichtung mit Anschluss an einen Erdungsanschluss aufweist.

Auch wenn die Beschichtungen 24, 25' und 26 nur sehr dünn sind, beispielsweise im Bereich unter den eingangs genannten 100 µm oder 50 µm liegen, ist der durch sie erzielte Effekt dennoch möglich, nämlich dass Ableitströme über sie abgeleitet werden zu einem Erdungsanschluss 28 und somit zur Erde und nicht über den Benutzer. So kann verhindert werden, dass bei über das normale Maß erhöhter elektrischer Leistung bzw. Spannung und Frequenz an der Induktionsspule höhere Wirbelströme in das Kochgeschirr 12 induziert werden. Es wird vermieden, dass sich im Kochgeschirr aufgrund des Flusses der Wirbelströme ein Spannungsabfall mit Potentialunterschied ergibt, der einem Benutzer beim Berühren des Kochgeschirrs 12 einen, wenn auch kleinen, elektrischen Schlag versetzen könnte. Die Abführung der Ableitströme reduziert die elektrische Spannung zum Kochgeschirr hin und beseitigt so die Gefahr des elektrischen Schlags.

## Patentansprüche

1. Induktionsheizeinrichtung (15, 15') für ein Induktionskochfeld (11, 11'), mit einer flachen Induktionsspule (17, 17') zur Anordnung unter einer Tragplatte oder Abdeckung (13, 13') des Induktionskochfeldes, **dadurch gekennzeichnet, dass** oberhalb der Induktionsspule (17, 17') mindestens eine elektrisch leitfähige, dünne Schicht (24, 24', 25', 26) vorgesehen ist, die an der Induktionsheizeinrichtung (15, 15') vorgesehen bzw. daran befestigt ist, wobei die Schicht (24, 24', 25', 26) geerdet ist.

2. Induktionsheizeinrichtung nach Anspruch 1, **dadurch gekennzeichnet, dass** die leitfähige Schicht (24, 24', 25', 26) eine Beschichtung einer Lage Flachmaterials (20a, 20'a, 20b, 20'b, 22, 22') oberhalb der Induktionsspule (17, 17') ist, wobei vorzugsweise das Flachmaterial eine Isolation ist, insbesondere eine elektrische Isolation.

3. Induktionsheizeinrichtung nach Anspruch 1 oder 2, **dadurch gekennzeichnet, dass** eine Isolation bzw. Isolationsfolie (20a, 20'a, 20b, 20'b) oberhalb der Induktionsspule (17, 17') mit der elektrisch leitfähigen, dünnen Schicht (24, 24', 25') versehen ist, insbesondere als Beschichtung, wobei vorzugsweise die Isolationsfolie an der Induktionsspule festgeklebt ist.

4. Induktionsheizeinrichtung nach einem der vorhergehenden Ansprüche, **dadurch gekennzeichnet, dass** die Schicht (24, 24', 25', 26) eine Dicke von maximal 100 µm aufweist, vorzugsweise weniger als 80 µm und insbesondere weniger als 50 µm.

5. Induktionsheizeinrichtung nach einem der vorhergehenden Ansprüche, **dadurch gekennzeichnet, dass** die Schicht (24, 24', 25', 26) aus einem Material besteht mit einem spezifischen elektrischen Widerstand deutlich über demjenigen von Kupfer, vorzugsweise aus Graphit oder aus Aluminium.

6. Induktionsheizeinrichtung nach einem der vorhergehenden Ansprüche, **dadurch gekennzeichnet, dass** die Schicht (24, 24', 25', 26) hochohmig mit dem Erdungsanschluss (28) verbunden ist.

7. Induktionsheizeinrichtung nach einem der vorhergehenden Ansprüche, **dadurch gekennzeichnet, dass** die Schicht (24, 24', 25', 26) eine flächenmäßige Ausdehnung von mindestens derjenigen der Induktionsspule (17, 17') aufweist, wobei vorzugsweise die Schicht die Induktionsspule seitlich überragt, insbesondere um mindestens 10% des Durchmessers.

8. Induktionsheizeinrichtung nach einem der vorhergehenden Ansprüchen, **dadurch gekennzeichnet, daß** die Schicht (24, 24', 25', 26) anstelle einer zusammenhängenden bzw. geschlossenen Fläche die Geometrie einer Spirale, einer Gabel oder eines Sterns aufweist.

9. Induktionsheizeinrichtung nach einem der vorhergehenden Ansprüche, **dadurch gekennzeichnet, dass** eine Wärmedämmschicht (2, 22') bzw. thermische Isolation oberhalb der Induktionsspule (17, 17') vorgesehen ist und diese Wärmedämmschicht die Schicht (26) trägt, insbesondere an der Unterseite, wobei vorzugsweise die Wärmedämmschicht Melange bzw. Fasermaterial ist.

10. Induktionsheizeinrichtung nach einem der vorhergehenden Ansprüche, **dadurch gekennzeichnet, dass** zwei elektrisch leitfähige, dünne Schichten (24, 24', 25', 26) vorgesehen sind, wobei sie vorzugsweise einen Abstand zueinander aufweisen bzw. mindestens eine tragende Fläche bzw. ein Bauteil zwischen sich haben.

11. Induktionskochfeld mit einer Induktionsheizeinrichturig (15, 15') nach einem der vorhergehenden Ansprüche, wobei die Induktionsheizeinrichtung (15, 15') unter einer Tragplatte (13, 13'), vorzugsweise in Form einer Glaskeramikplatte, angeordnet ist, **dadurch gekennzeichnet, dass** die Schicht (24, 24', 25', 26) separat von der Abdeckung ist, insbesondere mit Abstand dazu vorgesehen ist.

12. Induktionskochfeld nach Anspruch 11, **dadurch gekennzeichnet, dass** die Induktionsheizeinrichtung (15, 15') an die Unterseite der Tragplatte (13, 13') angedrückt ist, vorzugsweise mit dem Flachmaterial (22, 22') bzw. der Isolation (20a, 20'a, 20b, 20'b) gemäß Anspruch 2 oder 3.
